# EUROPÄISCHE PATENTANMELDUNG

(11) **EP 3 473 071 A1**
(43) Veröffentlichungstag der Anmeldung: **24.04.2019**
(21) Anmeldenummer: 18401081.7
(22) Anmeldetag: 14.09.2018
(51) Int. Cl.: A01B 73/00

(54) **FALTMECHANISMUS FÜR EINEN AN EINEM LANDWIRTSCHAFTLICHEN GERÄT ANGEORDNETEN SENSORMAST**

(30) Priorität: 23.10.2017 DE 102017124664
(71) Anmelder: Amazonen-Werke H. Dreyer GmbH & Co. KG, 49205 Hasbergen (DE)
(72) Erfinder: Kleine-Hartlage, Hubertus, 49186 Bad Iburg (DE); Walter, Achim, 49078 Osnabrück (DE); Wilke, Helmut, 49497 Mettingen (DE); Schiemenz, Friedhelm, 49205 Hasbergen (DE)

(57) **Zusammenfassung**

Faltmechanismus (7) mit End- und Startposition für einen Sensormasten (1), mit einem ersten und einem zweiten Teil (3, 4), wobei der Zweite (4) gegenüber dem ersten Teil (3) um einen ersten Drehpunkt (6) beweglich angeordnet ist, wobei der Faltmechanismus (7) zumindest einen Verstellzylinder (5) mit einer mit dem zweiten Teil (4) verbundene Kolbenstange (9) und eine Verriegelungsvorrichtung (11) umfasst, wobei die Kolbenstange (9) einen Querstift (10) aufweist, der in einen länglichen Ausschnitt (12c) an einer Hebelanordnung (12) eingreift, wobei der Verstellzylinder (5) drehfest an dem ersten Teil (3) angeordnet ist, wobei die Verriegelungsvorrichtung (11) einstückig mit dem ersten Teil (3) ausgebildet ist, wobei die Verriegelungsvorrichtung (11) zumindest eine kreisabschnittförmige, dem Querstift (10) zugewandte Führungsbahn (11a) aufweist, dessen Mittelpunkt einen zweiten Drehpunkt (14) bildet und dessen Enden jeweils zumindest einen Rücksprung (11b, 11c) bildet, wobei der erste und zweite Rücksprung (11b, 11c) jeweils der End- und Startposition des Faltmechanismus (7) zugeordnet sind, wobei der Rücksprung (11b, 11c) jeweils zumindest annährend eine Radiale des Kreisausschnittes bildet und einen Winkel von mehr als 90 Grad mit der Bahntangente des Kreises einschließt, so dass die langen Seiten des länglichen Ausschnittes (12c) in der End- und Startposition zumindest annährend eine Keilform mit dem jeweiligen Rücksprung (11b, 11c) bilden.

## Beschreibung

Die Erfindung betrifft einen Faltmechanismus für einen an einem landwirtschaftlichen Gerät angeordneten Sensormast gemäß dem Oberbegriff des Patentanspruches 1.

Ein derartiger Faltmechanismus ist in EP2 965 604B1 beschrieben. In diesem Fall wird der Faltmechanismus an einem quer zur Fahrtrichtung angeordneten Zinkenbalken verwendet.

Der Zinkenbalken ist Teil einer nicht angetriebenen Bodenbearbeitungsmaschine und dient im Wesentlichen zum Tragen von Bodenbearbeitungswerkzeugen. Zur Bearbeitung eines Feldes wird die Bodenbearbeitungsmaschine an eine landwirtschaftliche Zugmaschine gekoppelt. Um während der Feldarbeit eine vorteilhafte, große Arbeitsbreite zu erreichen, die sich jedoch für Transportfahrten auf das gesetzlich erlaubte Maximum beschränken lässt, ist der Zinkenbalken an seinen beiden Enden mit dem Faltmechanismus versehen. Das heißt der Faltmechanismus ist dazu eingerichtet, dass der jeweils äußerste Teil gegenüber dem mittleren Teil um einen Drehpunkt verschwenkbar ist, so dass sich die Breite des Zinkenbalkens verringert, wenn die Maschine in Transportstellung gebracht wird.

Ausgehend von der Betriebsstellung des Zinkenbalkens verfügt der Faltmechanismus über eine Startposition, die dem Zinkenbalken in ausgeklappter Stellung (Arbeitsstellung) entspricht und eine Endposition, die dem Zinkenbalken in eingeklappter Stellung (Transportstellung) entspricht. Um den äußersten Teil des Zinkenbalkens zwischen der End- und Startposition gegenüber dem mittleren Teil um einen Drehpunkt zu verschwenken, ist der Faltmechanismus mit einem Hydraulikzylinder versehen. Der Hydraulikzylinder ist am mittleren Teil befestigt und verfügt über eine Kolbenstange. Die Kolbenstange ist mittels eines Beschlags mit dem äußeren Teil verbunden. Hierzu weist die Kolbenstange einen Querstift auf.

Die Kolbenstange des Hydraulikzylinders ist in Endposition nahezu vollständig ausgefahren. Der Querstift der Kolbenstange greift in ein Langloch im Beschlag, welcher am äußeren Teil starr befestigt ist, ein. Um den Faltmechanismus aus der Endposition in die Startposition zu fahren, wird die Kolbenstange in den Hydraulikzylinder zurückgezogen. Der Querstift wird gegen eine der kurzen Seiten des Langlochs im Beschlag gezogen, so dass der äußere Teil des Zinkenbalkens sich in Richtung ausgeklappter Stellung bewegt. Problematisch hierbei ist, dass der Querstift sich frei in dem Langloch bewegen kann. Sollten Störkräfte jeglicher Art in Bewegungsrichtung des bewegten Teils auftreten führt dies dazu, dass der Querstift im Langloch ausschlägt. Dies ruft Verschleiß am Querstift und am Beschlag hervor.

Um den Einfluss von Stör- und insbesondere Betriebskräften auf den Faltmechanismus in ausgeklappter Stellung zu verringern, ist der Faltmechanismus mit einer Verriegelungsvorrichtung versehen. Die Verriegelungsvorrichtung ist mit einem trichterförmigen Verriegelungsmittel ausgebildet. Durch weiteres Zurückziehen der Kolbenstange in den Zylinder wird der Querstift entlang dem trichterförmigen Verriegelungsmittel gegen das Ende der Verriegelungsvorrichtung gezogen. Das Ende der Verriegelungsvorrichtung ist als ein Ausschnitt ausgebildet, der sich in Längsrichtung des Zinkenbalkens erstreckt. Bei Erreichen der ausgeklappten Position ist die Kolbenstange des Hydraulikzylinders nahezu vollständig eingefahren, so dass sich der Querstift im Ende der Verriegelungsvorrichtung befindet. Dadurch, dass der Ausschnitt in Längsrichtung des Querbalkens liegt stützt dieser Ausschnitt den Querstift gegen Stör- und Betriebskräfte in Fahrtrichtung in ausgeklappter Stellung ab. Zum einen wird so ein Schlagen des Querstifts vermindert und zum andern verhindert, dass der Faltmechanismus durch Einfluss von außen betätigt wird.

Nachteilig ist, dass die Verriegelungsvorrichtung so ausgebildet ist, dass sie nur in einer der beiden Endpositionen wirkt. Zudem wird der Querstift durch die beschriebene Anordnung während des Faltvorgangs nur in einer Richtung geführt, was sich durch Verschleiß des Querstifts und angrenzender Teile bemerkbar macht.

Der Erfindung liegt daher die Aufgabe zugrunde, einen robusten und störkraftunanfälligen Faltmechanismus zu schaffen.

Diese Aufgabe wird erfindungsgemäß dadurch gelöst, dass der Verstellzylinder drehfest an dem ersten Teil angeordnet ist, und dass die Verriegelungsvorrichtung einstückig mit dem ersten Teil ausgebildet ist, dass die Verriegelungsvorrichtung zumindest eine kreisabschnittförmige, dem Querstift zugewandte Führungsbahn aufweist, dessen Mittelpunkt einen zweiten, vom ersten Drehpunkt beabstandeten Drehpunkt bildet und dessen erstes und zweites Ende jeweils zumindest einen Rücksprung bildet, dass der erste und zweite Rücksprung jeweils der End- und Startposition des Faltmechanismus zugeordnet sind, dass der Rücksprung jeweils zumindest annährend eine Radiale des Kreisausschnittes bildet und einen Winkel von mehr als 90 Grad mit der Bahntangente des Kreises, in dem Punkt wo der Rücksprung beginnt, einschließt, so dass die langen Seiten des länglichen Ausschnittes an der einen Komponente der Hebelanordnung in der End- und Startposition zumindest annährend eine Keilform mit dem jeweiligen Rücksprung bilden. Durch die Herstellung der Verriegelungsvorrichtung mit dem ersten Teil aus einem Stück oder zumindest die starre Fixierung der Verriegelungsvorrichtung am ersten Teil wird eine robuste Führungsbahn für den Querstift ausgebildet.

Infolge dieser Maßnahme wird erreicht, dass der Faltmechanismus störkraftunanfälliger wird, da dem Querstift während des gesamten Faltvorgangs und auch in der Start- und Endposition eine stabil gestaltete Führungsbahn zugeordnet ist. Vorteilhaft ist hierbei, dass die Kolbenstange des Zylinders einem Kreisabschnitt folgen kann, da der Zylinder schwenkbar angeordnet ist. Zudem wird durch die Rücksprünge und die Keilform in vorteilhafter Weise sichergestellt, dass der Faltmechanismus in Start- und Endposition nicht durch Einflüsse von außen betätigt wird.

In vorteilhafter Weiterbildung der Erfindung ist vorgesehen, dass der Faltmechanismus in Start- und Endposition jeweils mit einer zusätzlichen mechanischen Anschlagvorrichtung ausgebildet ist und dass die mechanische Anschlagvorrichtung in Startposition einstellbar ausgebildet ist. Hierdurch wird erreicht, dass die Verriegelung besonders in Arbeitsstellung des Sensormastes zumindest nahezu spielfrei eine Klemmung des Querstifts erzeugt. Betriebskräfte werden somit direkt in die umliegenden Bauteile abgeleitet und nicht auf die Kolbenstange übertragen. Vorteilhaft ist hierbei, dass die Lebensdauer des Verstellzylinders dadurch gesteigert wird. Besonders vorteilhaft ist weiter, dass die Anschlagvorrichtung in Startposition einstellbar ist, um beispielsweise fertigungsbedingte Toleranzen oder betriebsbedingtes Spiel ausgleichen zu können.

In einer möglichen Weiterbildung der Erfindung umfasst die Hebelanordnung zumindest einen ersten und zumindest einen zweiten Umlenkhebel, wobei der erste Umlenkhebel um den weiten Drehpunkt schwenkbar angeordnet ist. Die vom Verstellzylinder ausgeführte Linearbewegung durch Aus- bzw. Einfahren der Kolbenstange wird so in einfacher Weise in eine Schwenkbewegung übersetzt, indem der Querstift den ersten Umlenkhebel mittels des Ausschnitts entlang der kreisabschnittförmigen Führungsbahn schiebt. Die Drehbewegung des ersten Umlenkhebels führt über den gelenkig mit ihm verbundenen zweiten Umlenkhebel zu einer Schwenkbewegung des oberen Teils des Sensormastes. Besonders vorteilhaft ist hierbei, wenn auf den Sensormast in Betriebsstellung einwirkende Windkräfte und andere Störkräfte angreifen, diese durch die Gestaltung der Hebelanordnung an kurz gestalteten Hebeln angreifen und somit geringe Lasten in die Vorrichtung einleiten.

In einer vorteilhaften Weiterbildung der Erfindung ist der Querstift mit zumindest einer Distanzbuchse versehen über die der Querstift mit der Führungsbahn der Verriegelungsvorrichtung zusammenwirkt. Infolge dieser Maßnahme wird erreicht, dass eine Relativbewegung zwischen Führungsbahn und Querstift entstehen kann, indem die Distanzbuchse auf der Führungsbahn rollt.

In einer besonders vorteilhaften Weiterbildung der Erfindung ist vorgesehen, dass die Distanzbuchse aus einem gehärteten, verschleißfesten Material gebildet ist. Dadurch werden die Kontaktbedingungen zwischen Querstift bzw. Distanzhülse und Verriegelungsvorrichtung verbessert, falls es zu Beginn oder kurz vor Ende des Faltvorganges wegen dem flachen Winkel zwischen Kolbenstange und Bahntangente der Führungsbahn dazu kommt, dass die mit dem Querstift zusammenwirkende Distanzbuchse nicht auf der Führungsbahn rollt, wie gewünscht, sondern reibt. Durch diese Maßnahme entsteht weniger und gleichmäßigerer Verschleiß als bei gleichartiger Materialpaarung von Verriegelungsvorrichtung und Distanzbuchse.

In einer möglichen Weiterbildung der Erfindung ist der Faltmechanismus mit geeigneten Mitteln, die dazu eingerichtet sind, die Distanzbuchse zumindest annährend spielfrei in Anlage an die Führungsbahn und/oder in End- oder Startposition an den jeweiligen Rücksprung zu halten, versehen. Hierdurch wird erreicht, dass der Querstift nahezu kein Bewegungsfreiraum besitzt, um bei Auftreten von Störkräften im länglichen Ausschnitt in der Hebelanordnung auszuschlagen. Vorteilhafterweise wird so verhindert, dass der Querstift und umliegende Komponenten durch die Einwirkung von Störkräften verschleißen. In einer besonders vorteilhaften Weiterbildung ist vorgesehen, dass die geeigneten Mittel durch den ersten und zweiten gelenkig verbundenen Umlenkhebel gebildet werden. Die zuvor bereits beschriebene Anordnung der Gelenkanordnung prägt der Distanzbuchse die vorteilhaften Zwangsbedingungen auf.

In einer bevorzugten Weiterbildung der Erfindung ist der Verstellzylinder ein hydraulischer oder pneumatischer Zylinder. In einer besonders bevorzugten Weiterbildung der Erfindung ist der der Verstellzylinder ein Elektrozylinder. So wird eine kompakte Bauweise in dem ansonsten stark eingeschränkten Bauraum realisiert. Alternativ wird die für den Anwendungsfall am besten geeignete Ausführungsform des Verstellzylinders gewählt.

Weitere Einzelheiten der Erfindung sind der Beispielsbeschreibung und den Zeichnungen zu entnehmen. Die Zeichnungen zeigen
- Fig.1: ein Sensormast mit einer Ausführungsform des erfindungsgemäßen Faltmechanismus in der Betriebsstellung in Seitenansicht,
- Fig.2: ein Sensormast mit dem Faltmechanismus gemäß Fig. 1 in Transportstellung in Seitenansicht,
- Fig.3: der Faltmechanismus gemäß Fig. 1 in Betriebsstellung, in Detaildarstellung, in perspektivischer Ansicht,
- Fig.4: der Faltmechanismus gemäß Fig.3 in Seitenansicht,
- Fig.5: der Faltmechanismus gemäß Fig.2 in Detaildarstellung in Seitenansicht.

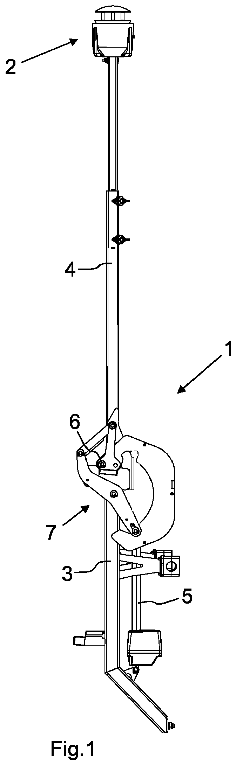

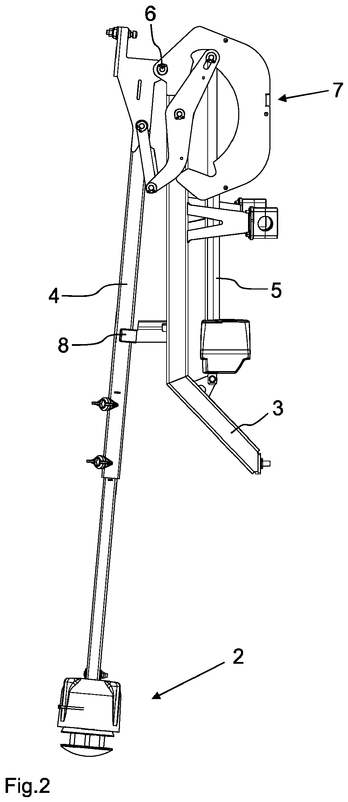

Ein Sensormast 1, welcher in Fig.1 gezeigt ist, wird an einem nicht dargestellten landwirtschaftlichen Gerät angeordnet, um eine Sensoranordnung 2, beispielsweise einen Windmesser, in Betriebsstellung in eine, gegenüber dem landwirtschaftlichen Gerät, angehobene Position zu bewegen. Hierzu weist der Sensormast 1 einen ersten Teil 3 und einen zweiten Teil 4 auf. Der erste Teil 3 wird fest mit dem landwirtschaftlichen Gerät verbunden, während der zweite Teil 4 gegenüber dem ersten Teil 3 mittels eines Verstellzylinders 5 um einen ersten Drehpunkt 6 beweglich angeordnet ist. Der Verstellzylinder 5 ist vorzugsweise als Hydraulik- oder Pneumatikzylinder, besonders vorzugsweise als Elektrozylinder ausgeführt. Um die Sensoranordnung 2 vor Beschädigungen beispielsweise durch Kollisionen beim Unterfahren von Bäumen zu schützen, ist es notwendig, dass der Sensormast 1 aus der Betriebsstellung in eine Transportstellung, wie in Fig.2 gezeigt, verbringbar ist. Hierzu ist der Sensormast 1 mit einem Faltmechanismus 7 versehen.

Wie Fig.2 zeigt, lässt sich der Sensormast 1 mittels des Faltmechanismus 7 in die zusammengeklappte Transportstellung verbringen. Mit Hilfe des Faltmechanismus 7 lässt sich der zweite Teil 4 gegenüber dem ersten Teil 3 um den ersten Drehpunkt 6 absenken, so dass die Sensoranordnung 2 vor Kollisionen geschützt ist. In Transportstellung liegt der zweite Teil 4 an einer gummigedämpften, mechanischen Anschlagvorrichtung 8 an. Die Anschlagvorrichtung 8 wirkt mit dem Faltmechanismus 7 zusammen, so dass die gesamte Vorrichtung in dieser Endposition weitestgehend gegen Erschütterungen unempfindlich ist.

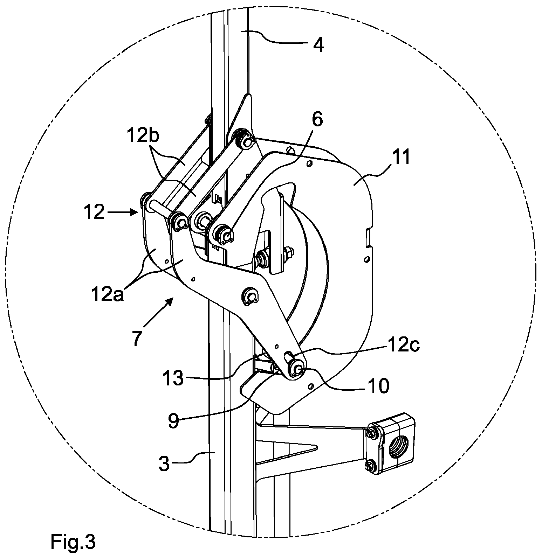

Da die Sensoranordnung 2 in der Betriebsstellung, wie Fig.1 zeigt, durch den zweiten Teil 4 hoch über dem Drehpunkt 6 getragen wird, ist es notwendig die stabilisierenden Teile, hier besonders den Faltmechanismus 7, robust zu gestalten. Zudem ist der Sensormast 1, insbesondere der zweite Teil 4, während des Betriebs erhöhten Belastungen ausgesetzt. Hierzu zählen neben Erschütterungen während der Fahrt auch Windkräfte, welche mit steigender Fahrgeschwindigkeit überproportional ansteigen. Wie Fig.3 zeigt, ist der Faltmechanismus 7 daher auf der in Fahrtrichtung betrachteten Vorder- und Rückseite des Sensormasten 1 gleichartig, symmetrisch ausgeführt. Hierdurch lassen sich auftretende Störkräfte, besonders in Nähe des ersten Drehpunkts 6, besser in die umliegende Strukturen ableiten und der Faltmechanismus 7 gewinnt an Stabilität.

Grundsätzlich wirken für den Faltmechanismus 7 der Verstellzylinder 5 mit einer Kolbenstange 9 und einem, der Kolbenstange 9 zugeordneten, Querstift 10, eine Verriegelungsvorrichtung 11 und eine Hebelanordnung 12 zusammen. Der Verstellzylinder 5 ist drehfest zwischen Vorder- und Rückseite an dem ersten Teil 3 des Sensormasten 1 angeordnet, so dass die Kolbenstange 9 mit dem Querstift 10 mittig zwischen den symmetrisch ausgeführten Komponenten ein- und ausfahren kann. Der Querstift 10 ist mit einer Distanzbuchse 13 versehen und erstreckt sich von der Kolbenstange 9 in Fahrtrichtung nach vorn und hinten, um mit Führungsbahnen 11a der Verriegelungsvorrichtung 11 zusammenzuwirken. Der Verriegelungsvorrichtung 11 ist darüber hinaus starr mit dem ersten Teil 3 verbunden und neben den kreisabschnittförmigen Führungsbahnen 11a, welche dem Querstift 10 zugewandt sind, mit ersten Rücksprungen 11b und zweiten Rücksprungen 11 c am ihrem jeweiligen Ende ausgebildet. Die Hebelanordnung 12 besteht aus zwei ersten Umlenkhebeln 12a und zwei zweiten Umlenkhebeln 12b, wobei die ersten Umlenkhebel 12a mit Langlöchern 12c zur Aufnahme des Querstifts 10 versehen sind und gelenkig mit den zweiten Umlenkhebeln 12b verbunden sind.

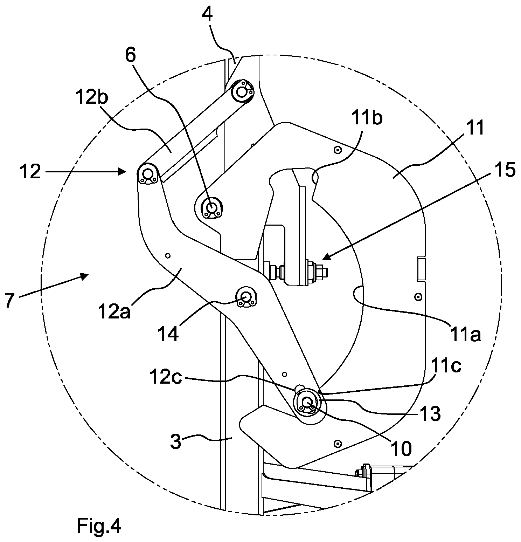

Fig.4 zeigt den zuvor beschriebenen Faltmechanismus 7 in Betriebsstellung. Die Betriebsstellung des Sensormasten 1 entspricht hierbei der Startposition des Faltmechanismus 7. Um den Sensormast 1 aus der Betriebsstellung in die Transportstellung bzw. den Faltmechanismus 7 aus der Startposition in die Endposition zu verbringen, wird die Kolbenstange 9 des Verstellzylinders 5 ausgefahren. Dadurch wird der Querstift 10 in den Langlöchern 12c entlang der zweiten Rücksprünge 11c, welche der Startposition zugeordnet sind, in Richtung der Führungsbahnen 11a bewegt. Sobald der Querstift 10 über die Distanzbuchse 13 mit den Führungsbahnen 11a zusammenwirkt, wird die Distanzbuchse 13 nahezu spielfrei in Anlage an die Führungsbahnen 11a gehalten und die ersten Umlenkhebel 12a führen bei weiterem Ausfahren der Kolbenstange 9 eine Drehbewegung aus. Dieser Ablauf ist dadurch bedingt, dass der Mittelpunkt der kreisabschnittförmigen Führungsbahnen 11a einen zweiten Drehpunkt 14 bildet und die ersten Umlenkhebel 12a drehfest um den zweiten Drehpunkt 14 befestigt sind. Mittels der Langlöcher 12c wird die Distanzbuchse 13 so auf einem konstanten Kurvenradius gehalten. Da der Verstellzylinder 5 drehfest am ersten Teil 3 angeordnet ist kann die Kolbenstange 9 dieser Bewegung problemlos folgen.

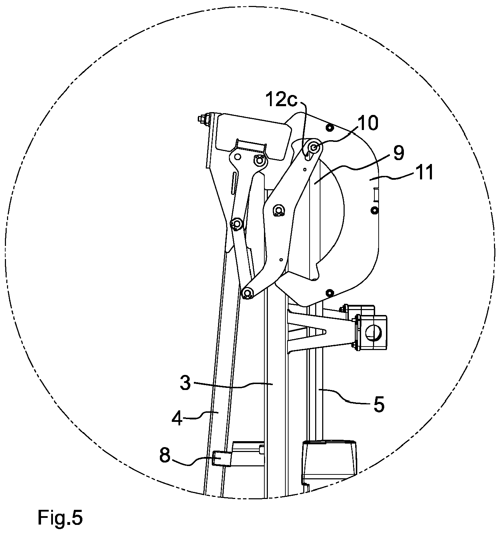

Während die Kolbenstange 9 weiter ausfährt, rollt die Distanzbuchse 13 auf den Führungsbahnen 11a ab und der Querstift 10 versetzt die ersten Umlenkhebel 12a weiter in Drehbewegung um den zweiten Drehpunkt 14 entgegengesetzt dem Uhrzeigersinn. Um die Kontaktbedingungen zwischen Distanzbuchse 13 und den Führungsbahnen 11a zu verbessern, ist vorgesehen, dass die Distanzbuchse 13 aus einem gehärteten, verschleißfesten Material gebildet wird. Die Drehbewegung der ersten Umlenkhebel 12a überträgt sich über die gelenkig verbundenen zweiten Umlenkhebel 12b in eine abwärts gerichtete Schwenkbewegung des zweiten Teils 4. Die Endposition, wie Fig.2 und 5 zeigen, des Faltmechanismus 7 wird erreicht, wenn die Kolbenstange 9 so weit ausgefahren ist, dass der Querstift 10 den ersten Rücksprung 11b erreicht. Der Querstift 10 verlässt die Führungsbahnen 11a und die Drehbewegung der ersten Umlenkhebel 12a endet. Der Querstift 10 wird in den Langlöchern 12c entlang der ersten Rücksprünge 11b um einen Sicherheitsabstand von den Führungsbahnen 11a verschoben und der Verbringvorgang ist beendet.

Um die Vorrichtung in der Start- (Fig.1, 3, 4) und Endposition (Fig.2, 5) gegen Erschütterungen und Störkräfte zu sichern, werden die beweglichen Komponenten des Faltmechanismus 7 verklemmt. Die Rücksprünge 11b und 11c bilden jeweils etwa eine Radiale des Kreises der Führungsbahnen 11a. Sie schließen dabei allerdings einen Winkel von mehr als 90 Grad mit der Bahntangente ein. Dadurch dass die Mittelachsen der Langlöcher 12c genau auf der Radialen liegen und die langen Seiten parallel dazu angeordnet sind, bildet sich zwischen den Langlöcher 12c und den Rücksprüngen 11b, 11c eine spitz zulaufende Keilform.

Der Faltmechanismus 7 ist in Start-, wie in Fig.4 dargestellt, und Endposition, wie in Fig.5 dargestellt, jeweils mit einer mechanischen Anschlagvorrichtung 8, 15 ausgebildet, wobei die Anschlagvorrichtung 15 in Startposition einstellbar ist. Das Verschieben des Querstifts 10 in die zuvor beschriebene Keilform zwischen den Langlöchern 12c und den Rücksprüngen 11b, 11c bewirkt eine weitere kleine Verschiebung der beweglichen Komponenten des Faltmechanismus 7. Die Verschiebung steht den mechanischen Anschlagvorrichtungen 8, 15 entgegen, sodass eine Klemmwirkung entsteht.

Vorteilhaft ist, dass die Anschlagvorrichtung 15 in Startposition, wie Fig.4 zeigt, einstellbar ist. Die Anschlagvorrichtung 15 ist mit geeigneten Mitteln, die dazu eingerichtet sind Fertigungstoleranzen und montagebedingtes Spiel auszugleichen versehen. Besonders vorteilhaft lässt sich so sicherstellen, dass die zuvor beschriebene Klemmwirkung besonders in Betriebsstellung des Sensormasten 1 herstellbar ist. Der Faltmechanismus 7 ist daher dazu geeignet auch bei großen Störkräften eingesetzt zu werden.

Zusammenfassend wir der vorstehend beschriebene Faltmechanismus 7 durch die folgenden Schritte von der Transportstellung in die Betriebsstellung bzw. von der Startposition in die Endposition verbracht:
- die Kolbenstange 9 wird in den Verstellzylinder 5 zurückgezogen,
- der Querstift 10 der Kolbenstange 9 bewegt sich entgegen einer Klemmwirkung, (die sich aus dem Zusammenwirken der mechanischen Anschlagvorrichtung in Endposition, wie Fig.5 zeigt, und der Keilform zwischen den länglichen Ausschnitten 12c an den Komponenten 12a der Hebelanordnung und dem ersten Rücksprung 11b bildet,) mittels der Distanzbuchse 13 entlang dem ersten Rücksprung 11b in dem länglichen Ausschnitt 12c zumindest annährend in Richtung des zweiten Drehpunktes 14,
- der Querstift 10 überwindet mittels der Distanzbuchse 13 den ersten Rücksprung 11b und fährt zumindest annährend spielfrei, drehbar zwischen dem länglichen Ausschnitt 12c und der kreisabschnittförmigen Führungsbahn 11a angeordnet die kreisabschnittförmige Führungsbahn 11a entlang in Richtung des zweiten Rücksprunges 11c,
- die ersten Umlenkhebel 12a drehen von dem Querstift 10 geschoben um den zweiten Drehpunkt 14, wodurch der zweite Teil 4 des Sensormasten 1 mittels der zweiten Umlenkhebel 12b um den ersten Drehpunkt 6 sich in Richtung einer zumindest annährend vertikalen Position bewegt,
- der Querstift 10 erreicht mittels der Distanzbuchse 13 entlang der Führungsbahnen 11a von dem Verstellzylinder 5 bewegt den zweiten Rücksprung 11c und bewegt sich zumindest annährend spielfrei in eine Klemmwirkung, (die sich aus dem Zusammenwirken der mechanischen Anschlagvorrichtung 15 in Startposition, wie in Fig.4 dargestellt, und der Keilform zwischen den länglichen Ausschnitten 12c an den Komponenten 12a der Hebelanordnung und dem zweiten Rücksprung 11c bildet,) erzeugend mittels der Distanzbuchse 13 entlang dem zweiten Rücksprung 11c in den länglichen Ausschnitten 12c weg vom zweiten Drehpunkt 14.

### Bezugszeichenliste

- 1: Sensormast
- 2: Sensoranordnung
- 3: erster Teil
- 4: zweiter Teil
- 5: Verstellzylinder
- 6: erster Drehpunkt
- 7: Faltmechanismus
- 8: Anschlagvorrichtung
- 9: Kolbenstange
- 10: Querstift
- 11: Verriegelungsvorrichtung
- 11a: Führungsbahn
- 11b: erster Rücksprung
- 11c: zweiter Rücksprung
- 12: Hebelanordnung
- 12a: erster Umlenkhebel
- 12b: zweiter Umlenkhebel
- 12c: Langloch
- 13: Distanzbuchse
- 14: zweiter Drehpunkt
- 15: Anschlagvorrichtung

## Patentansprüche

1. Faltmechanismus (7) mit einer End- und einer Startposition für einen an einem landwirtschaftlichen Gerät angeordneten Sensormasten (1), wobei der Sensormast (1) einen ersten Teil (3) und einen zweiten Teil (4) aufweist, wobei der zweite Teil (4) gegenüber dem ersten Teil (3) um einen ersten Drehpunkt (6) beweglich angeordnet ist, wobei der Faltmechanismus (7) zumindest einen Verstellzylinder (5) mit einer Kolbenstange (9) und eine Verriegelungsvorrichtung (11) umfasst, wobei der Verstellzylinder (5) an dem ersten Teil (3) befestigt ist, und wobei die Kolbenstange (9) über eine Hebelanordnung (12) mit dem zweiten Teil (4) verbunden ist, wobei die Kolbenstange (9) einen Querstift (10) aufweist und der Querstift (10) in zumindest einen länglichen Ausschnitt (12c) an zumindest einer Komponente (12a) der Hebelanordnung (12) eingreift, **dadurch gekennzeichnet, dass** der Verstellzylinder (5) drehfest an dem ersten Teil (3) angeordnet ist, dass die Verriegelungsvorrichtung (11) einstückig mit dem ersten Teil (3) ausgebildet ist, dass die Verriegelungsvorrichtung (11) zumindest eine kreisabschnittförmige, dem Querstift (10) zugewandte Führungsbahn (11a) aufweist, dessen Mittelpunkt einen zweiten, vom ersten Drehpunkt (6) beabstandeten Drehpunkt (14) bildet und dessen erstes und zweites Ende jeweils zumindest einen Rücksprung (11b, 11c) bildet, dass der erste und zweite Rücksprung (11b, 11c) jeweils der End- und Startposition des Faltmechanismus (7) zugeordnet sind, dass der Rücksprung (11b, 11c) jeweils zumindest annährend eine Radiale des Kreisausschnittes bildet und einen Winkel von mehr als 90 Grad mit der Bahntangente des Kreises, in dem Punkt wo der Rücksprung (11b, 11c) beginnt, einschließt, so dass die langen Seiten des länglichen Ausschnittes (12c) an der zumindest einen Komponente (12a) der Hebelanordnung (12) in der End- und Startposition zumindest annährend eine Keilform mit dem jeweiligen Rücksprung (11b, 11c) bilden.

2. Faltmechanismus (7) nach Anspruch 1, **dadurch gekennzeichnet, dass** die Hebelanordnung (12) zumindest einen ersten und zumindest einen zweiten Umlenkhebel (12a, 12b) umfasst, dass der erste Umlenkhebel (12a) um den zweiten Drehpunkt (14) schwenkbar angeordnet ist.

3. Faltmechanismus (7) nach zumindest einem der vorstehenden Ansprüche, **dadurch gekennzeichnet, dass** der Querstift (10) mit zumindest einer Distanzbuchse (13) versehen ist über die der Querstift (10) mit der Führungsbahn (11a) der Verriegelungsvorrichtung (11) zusammenwirkt.

4. Faltmechanismus (7) nach Anspruch 3, **dadurch gekennzeichnet, dass** die Distanzbuchse (13) aus einem gehärteten, verschleißfesten Material gebildet ist.

5. Faltmechanismus (7) nach zumindest einem der vorstehenden Ansprüche, **dadurch gekennzeichnet, dass** der Faltmechanismus (7) mit geeigneten Mitteln, die dazu eingerichtet sind, die Distanzbuchse (13) zumindest annährend spielfrei in Anlage an die Führungsbahn (11a) und/oder in End-oder Startposition an den jeweiligen Rücksprung (11b, 11c) zu halten, versehen ist.

6. Faltmechanismus (7) nach Anspruch 5, **dadurch gekennzeichnet, dass** die geeigneten Mittel durch den ersten und zweiten gelenkig verbundenen Umlenkhebel (12a, 12b) gebildet werden.

7. Faltmechanismus (7) nach zumindest einem der vorstehenden Ansprüche, **dadurch gekennzeichnet, dass** der Verstellzylinder (5) ein Elektrozylinder ist.

8. Faltmechanismus (7) nach zumindest einem der vorstehenden Ansprüche, **dadurch gekennzeichnet, dass** der Verstellzylinder (5) ein hydraulischer oder pneumatischer Zylinder ist.

9. Faltmechanismus (7) nach zumindest einem der vorstehenden Ansprüche, **dadurch gekennzeichnet, dass** der Faltmechanismus (7) in Start- und Endposition jeweils mit einer zusätzlichen mechanischen Anschlagvorrichtung (8, 15) ausgebildet ist.

10. Faltmechanismus nach Anspruch 9, **dadurch gekennzeichnet, dass** die mechanische Anschlagvorrichtung (15) in Startposition einstellbar ausgebildet ist.
